# FASCICULE DE BREVET EUROPEEN

(11) **EP 2 555 939 B1**
(45) Date de publication et mention de la délivrance du brevet: **20.11.2019**
(21) Numéro de dépôt: 11718463.0
(22) Date de dépôt: 07.04.2011
(51) Int. Cl.: B60K 23/08, B60K 28/16, B60W 10/06, B60W 10/12, B60W 30/18, B60W 10/00

(54) **SYSTÈME ET PROCÉDÉ DE LIMITATION DE COUPLE MOTEUR D'UN VÉHICULE À QUATRE ROUES MOTRICES**
SYSTEM UND VERFAHREN ZUR BEGRENZUNG DES MOTORDREHMOMENTS EINES FAHRZEUGS MIT ALLRADANTRIEB
SYSTEM AND METHOD FOR LIMITING THE ENGINE TORQUE OF A FOUR-WHEEL-DRIVE VEHICLE

(30) Priorité: 09.04.2010 FR 1052705
(43) Date de publication de la demande: 13.02.2013
(73) Titulaire: Renault S.A.S., 92100 Boulogne-Billancourt (FR)
(72) Inventeur: FOUSSARD, François, F-76100 Rouen (FR); MONTI, Alessandro, F-92250 La Garenne Colombes (FR); POTHIN, Richard, F-78760 Jouars Pontchartrain (FR); ROMANI, Nicolas, F-75016 Paris (FR)
(86) Numéro de dépôt international: PCT/FR2011/050790
(87) Numéro de publication internationale: WO 2011/124857

(56) Documents cités:
- EP-A2- 1 327 547
- WO-A1-2009/110148
- US-A1- 2004 249 518
- US-A1- 2005 029 034
- US-A1- 2007 039 770
- US-A1- 2009 318 265
- US-B1- 6 493 622

## Description

La présente invention se situe dans le domaine technique des transmissions pour véhicules automobiles et plus particulièrement dans le domaine de la commande des transmissions de véhicules automobiles à quatre roues motrices.

Les véhicules à quatre roues motrices présentent une consommation de carburant élevée et de mauvaises performances sur route. Depuis quelques années, de nouveaux véhicules à transmission intégrale présentent toutefois des performances améliorées. Ces véhicules sont caractérisés par un transfert de couple variable entre le train de roues motrices avant et le train de roues motrices arrière. Un contrôle précis de ce type de transmission permet de concilier performances et sécurité, tant sur route qu'en tout terrain.

Ces véhicules utilisent notamment un système de répartition des efforts longitudinaux sur les quatre roues, basé par exemple sur l'utilisation d'un coupleur. Un tel système a une capacité maximale de transmission du couple moteur sur le train arrière et présente trois modes de fonctionnement différents.

Un premier mode de transmission correspond à une transmission d'une partie variable de la capacité maximale de couple moteur au train arrière et correspond à un coupleur dit « piloté ». Il est utilité dans un mode de fonctionnement à quatre roues motrices automatique dit « mode 4x4 automatique ».

Un deuxième mode de transmission correspond à une transmission de la totalité de la capacité maximale de couple moteur au train arrière et correspond à un coupleur dit « fermé ». Il est utilisé dans un mode de fonctionnement à quatre roues motrices tout-terrain dit « mode 4x4 tout-terrain ».

Enfin, un troisième mode correspond à une absence de transmission de couple moteur au train arrière et correspond à un coupleur dit ouvert. Il est utilisé dans un mode de fonctionnement à deux roues motrices dit « mode 4x2 ».

Un véhicule automobile à quatre roues motrices comprend des moyens de sélection actionnables par l'utilisateur pour sélectionner le mode de fonctionnement du système entre les trois modes « 4x2 », « 4x4 automatique » ou « 4x4 tout-terrain ».

Il arrive souvent que, lors de la conduite en tout terrain d'un véhicule, le dosage de la pédale d'accélérateur soit très difficile par rapport à la condition de conduite (pente, adhérence de la route ou du sol, charge). Dans ce cas, il peut arriver que le train avant du véhicule de traction commence à glisser. Le système à quatre roues motrices piloté réagit en couplant le train arrière au train avant afin de réduire l'écart de vitesse entre les deux trains. Si le couple moteur demandé par le conducteur est trop important par rapport au couple qui peut passer par le dispositif 4x4, le train avant continue de glisser vis-à-vis du train arrière. La motricité est alors fortement réduite. De plus, le dispositif 4x4 chauffe de plus en plus jusqu'à s'ouvrir complètement en annulant le couple moteur transmis au train arrière. Le véhicule fonctionne alors en mode 4x2 au lieu du 4x4 sollicité.

Le but de l'invention est de pallier ces inconvénients et de proposer un dispositif de limitation de couple moteur sécurisé, le plus possible transparent pour le conducteur, rapide et efficace.

Il est connu, par le document US 2005/029034 un système de commande de couple moteur d'un véhicule automobile à système de traction à quatre roues motrices comprenant un différentiel permettant la distribution du couple aux roues, activé et désactivé par un opérateur et commandé par un système de commande moteur qui permet de calculer au moins une variable caractéristique du fonctionnement du véhicule, de limiter le couple moteur en fonction desdites variables, et d'élaborer une consigne de limitation du couple moteur destinée au différentiel. Ce document décrit également des moyens de désactivation de cette limitation de couple.

Plus particulièrement la présente invention vise à fournir un système et un procédé de commande d'un actionneur de transfert de couple apte à prendre en compte la situation de conduite et l'état du système 4x4 pour limiter le couple moteur du véhicule afin de maximiser les capacités de franchissement et de motricité d'un véhicule doté d'un système 4x4 et la disponibilité du système 4x4 piloté, notamment pour les conducteurs non experts.

L'invention a donc pour objet, selon un premier aspect, un système de limitation du couple moteur d'un véhicule automobile à système de traction à quatre roues motrices, comprenant un actionneur piloté et configuré pour distribuer le couple moteur aux roues motrices, des moyens de calcul pour calculer au moins une variable caractéristique du fonctionnement du véhicule et un module de limitation du couple moteur en fonction desdites variables.

Selon une caractéristique générale de ce système, le module de limitation du couple moteur comprend des moyens pour élaborer une consigne de limitation du couple moteur destinée à l'actionneur, et des moyens de désactivation du module de limitation du couple moteur en fonction des variables caractéristiques du fonctionnement du moteur.

Selon l'invention, les moyens de désactivation sont aptes à élaborer un premier signal de désactivation pour une désactivation immédiate du module de limitation de couple moteur et un deuxième signal de désactivation pour une désactivation progressive du module de limitation de couple moteur. Pour améliorer le ressenti du conducteur, on peut prévoir en fonction de la gravité d'une panne, de désactiver le module de limitation de couple moteur immédiatement ou de façon progressive. Naturellement, dans le cas où aucune panne n'est présente, le module est activé. La limitation du couple moteur est par exemple désactivée progressivement pour des valeurs trop faibles du régime moteur, ou par exemple lorsque la vitesse du véhicule dépasse une certaine valeur seuil.

De préférence, les signaux d'entrée du module de limitation du couple moteur servant à élaborer la consigne et à activer ou désactiver la limitation de couple sont caractéristiques de la situation de conduite d'une part et de l'état de fonctionnement du système quatre roues motrices du véhicule, d'autre part. La situation de conduite peut être caractérisée par le couple moteur demandé par le conducteur, la vitesse du véhicule, le régime moteur, le rapport engagé, ou encore l'écart de vitesse entre le train avant et le train arrière.

L'état du système 4x4 peut être caractérisé par le mode de fonctionnement du système 4x4, la consigne de couple à transmettre, ou la température de l'actionneur 4x4. La limitation du couple moteur n'est possible qu'en mode quatre roues motrices, un paramétrage spécifique étant nécessaire pour qu'elle soit possible dans le mode deux roues motrices.

Avantageusement, le système de limitation du couple moteur redonne le contrôle au conducteur de façon progressive grâce à un mécanisme limitant les variations du couple au cours du temps. Ce mécanisme de limitation des variations du couple au cours du temps peut être fonction de la température de l'actionneur. A faible température le confort et la prestation de franchissement sont privilégiés et à haute température, la tenue et la disponibilité de l'actionneur le sont.

Des moyens de traitement des signaux d'entrée sont configurés pour filtrer les signaux d'entrée afin d'élaborer des signaux filtrés de type booléens et de déterminer notamment le rapport de transmission de la boîte engagé destinés au moyens d'élaboration de la consigne. Des filtres passe bas du premier ordre sont notamment utilisés pour éliminer tout bruit haute fréquence de variables telles que la vitesse du train arrière, la vitesse de rotation du moteur, la vitesse du véhicule, ou encore le couple moteur demandé par le conducteur. De plus la vitesse filtrée du train arrière et la vitesse filtrée de rotation du moteur peuvent être utilisées pour estimer le rapport de boîte engagé.

Avantageusement, le moyen d'élaboration de la consigne comprend un module de détection des conditions de limitation apte à délivrer des signaux de contrôle d'activation et de désactivation des modules de limitation et un module de génération de consigne apte à élaborer un signal de consigne de couple moteur.

Par exemple, le module de détection des conditions de limitation est apte à délivrer des signaux de contrôle en fonction de la valeur des variables caractéristiques du fonctionnement du véhicule et des signaux d'activation et de désactivation.

L'invention a également pour objet, selon un deuxième aspect, un procédé de limitation du couple moteur d'un véhicule automobile à système de traction à quatre roues motrices comprenant un actionneur piloté et configuré pour distribuer le couple moteur aux roues motrices, dans lequel on calcule au moins une variable caractéristique du fonctionnement du véhicule, et on limite le couple moteur en fonction desdites variables.

Dans un mode de mise en œuvre, on élabore une consigne de limitation du couple moteur destiné à l'actionneur en fonction de premières variables caractéristiques du fonctionnement du véhicule et de variables représentatives de l'état de fonctionnement du système de traction, et l'on désactive le module de limitation du couple moteur en fonction des deuxièmes variables caractéristiques du fonctionnement du moteur.

Dans un mode de mise en œuvre avantageux, on procède à une désactivation immédiate ou à une désactivation progressive de la limitation du couple moteur.

On peut prévoir de limiter progressivement les variations du couple moteur au cours du temps en fonction de la température de l'actionneur.

On peut également, selon une autre caractéristique de ce procédé, traiter les signaux d'entrée afin de déterminer le rapport de transmission de la boîte engagé pour l'élaboration de la consigne.

D'autres avantages et caractéristiques de l'invention apparaîtront à l'examen de la description détaillée d'un mode de réalisation nullement limitatif, et des dessins annexés, sur lesquels :
- la figure 1 illustre un système de commande électronique conforme à l'invention ;
- la figure 2 illustre un moyen de commande de l'actionneur conforme à l'invention ;
- la figure 3 illustre un exemple de réalisation du module d'activation/désactivation du moyen de commande de l'actionneur conforme à l'invention ;
- la figure 4 illustre un exemple de réalisation du module de filtrage du moyen de commande de l'actionneur conforme à l'invention ;
- la figure 5 illustre un exemple de détermination du rapport de boîte engagé conforme à l'invention ;
- la figure 6 illustre un exemple de détermination de la consigne de limitation de couple moteur conforme à l'invention ;
- la figure 7 illustre un exemple de procédé de détermination de l'état du module de détermination de la consigne selon l'invention ;
- la figure 8 illustre une possible réalisation de la consigne de limitation de couple moteur selon l'invention.

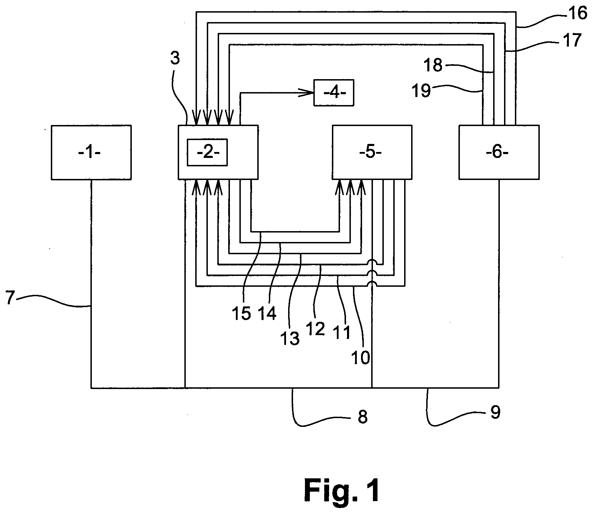

Sur la figure 1, on a représenté un système de commande électronique équipant un véhicule à quatre roues motrices.

Le système de commande illustré comprend des moyens de détermination 1 de caractéristiques du fonctionnement du véhicule, un moyen 3 de commande de l'actionneur, un moyen de limitation de couple moteur 2 inclus dans le moyen de commande 3, un actionneur de transfert de couple 4 destiné à répartir le couple moteur aux roues motrices du véhicule, un moyen de commande du moteur 5 et un calculateur ABS 6.

Ce système de commande met en œuvre notamment un échange de données entre le moyen de commande du moteur 5 (ECM) qui commande le moteur thermique ou électrique du véhicule et le moyen de commande de l'actionneur 3 (ETC) à travers un bus de données (réseau CAN).

Les moyens de détermination 1 sont ici reliés au moyen de commande de l'actionneur 3 par la connexion 7, au moyen de commande du moteur 5 par la connexion 8 et au calculateur ABS 6 par la connexion 9. Les moyens de détermination 1 peuvent comprendre des capteurs physiques ou des moyens de calcul aptes à déterminer des variables caractéristiques du fonctionnement du véhicule à partir d'un modèle et de données fournies par d'autres capteurs.

Le moyen de commande de l'actionneur 3 est ici relié en sortie au moyen de commande du moteur 5 par les connexions 10 à 12 et en entrée par les connexions 13 à 15. Le calculateur ABS 6 est relié en entrée au moyen de commande de l'actionneur 3 par les connexions 16 à 19.

Les moyens de détermination 1 émettent à destination notamment du moyen de commande de l'actionneur 3, du moyen de commande du moteur 5, et du calculateur ABS 6 des signaux relatifs notamment au régime moteur EngineSpeed, au couple moteur demandé par le conducteur DriverEngineTorqueReq, à la vitesse de la roue avant droite WheelSpeed_FR, à la vitesse de la roue avant gauche WheelSpeed_FL, à la vitesse de la roue arrière droite WheelSpeed_RR, à la vitesse de la roue arrière gauche WheelSpeed_RL, à la vitesse du véhicule VehicleSpeed.

Le moyen de commande de l'actionneur 3 émet à destination du moyen de commande du moteur 5 un signal d'horloge ETC_Clock par la connexion 13 permettant de vérifier la mise à jour des informations. Si le compteur n'est pas remis à jour régulièrement, le moyen de commande de l'actionneur 3 désactive immédiatement le module de limitation de couple moteur 2.

Le moyen de commande de l'actionneur 3 émet à destination du moyen de commande du moteur 5 une consigne de couple moteur ETL_EngTorqueReq par la connexion 14 et un signal de demande de limitation de couple moteur ETL_TorqueReductionReq par la connexion 15 qui lorsqu'il n'est pas valide entraîne une absence d'application de la limitation du couple moteur par le moyen de commande du moteur 5.

Le moyen de commande du moteur 5 émet à destination du moyen de commande de l'actionneur 3 un signal relatif au régime moteur EngineSpeed par la connexion 10, au couple demandé par le conducteur DriverEngineTorqueReq par la connexion 11, un signal d'horloge ECM_Clock par la connexion 12 pour vérifier la mise à jour des informations et un signal d'acceptation de limitation de couple moteur ECM_TorqueAck par la connexion 12 qui s'il n'est pas valide entraîne une désactivation immédiate du module de limitation de couple moteur 2. Lorsque le signal d'horloge ECM_Clock n'est pas remis à jour régulièrement le moyen de commande de l'actionneur 3 désactive immédiatement le module de limitation de couple moteur 2. Le calculateur ABS 6 est relié en entrée au moyen de commande de l'actionneur 3 et émet à destination du moyen de commande de l'actionneur 3 les vitesses des quatre roues motrices WheelSpeed_FR, WheelSpeed_RR, WheelSpeed_RL, WheelSpeed_FL par les connexions 16 à 19. Ainsi pour des raisons de sécurité plusieurs informations sont échangées entre les deux moyens de commande 3 et 5 afin de rendre robuste la stratégie de limitation de couple moteur.

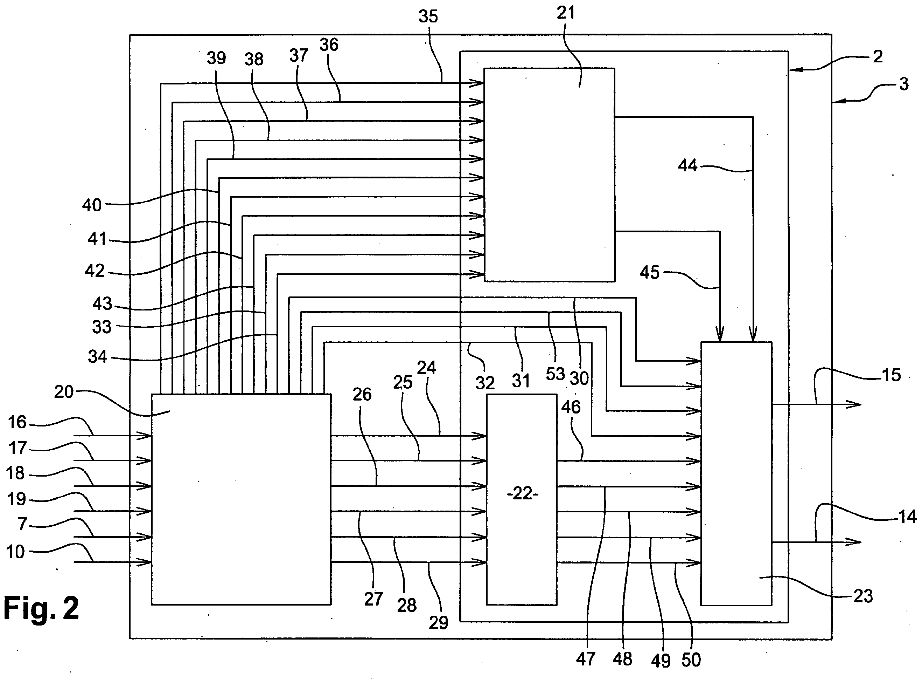

La figure 2 représente le moyen de commande de l'actionneur 3 comprenant le module de limitation de couple moteur 2 permettant l'élaboration de la consigne de couple moteur ETL_EngTorqueReq émise à destination du moyen de commande du moteur 5 par la connexion 14 et du signal de demande de limitation de couple moteur ETL_TorqueReductionReq par la connexion 15. Le moyen de commande de l'actionneur 3 comprend un premier module 20 général, un deuxième module 21 d'activation/désactivation du module de limitation de couple moteur 2, un troisième module 22 de filtrage des signaux d'entrées, et un quatrième module 23 de détermination de la consigne de couple moteur ETL_EngTorqueReq. Les deuxième, troisième et quatrième modules 21, 22 et 23 constituent le moyen de limitation du couple moteur 2.

Le premier module 20 reçoit notamment en entrée le couple moteur demandé par le conducteur DriverEngineTorqueReq en provenance des moyens de détermination 1 par la connexion 7, le régime moteur EngineSpeed en provenance du moyen de commande du moteur 5 par la connexion 10, les vitesses des quatre roues WheelSpeed_FR, WheelSpeed_RR, WheelSpeed_RL, WheelSpeed_FL en provenance du calculateur ABS 6 respectivement par les connexions 16 à 19. Le premier module 20, relié en entrée au module de limitation de couple moteur 2, émet les signaux relatifs aux vitesses des quatre roues WheelSpeed_FR, WheelSpeed_RR, WheelSpeed_RL, WheelSpeed_FL, au régime moteur EngineSpeed et le couple moteur demandé par le conducteur DriverEngineTorqueReq respectivement par les connexions 24 à 29, les signaux relatifs au mode du système (mode quatre roues motrices automatique, deux roues motrices ou quatre roues motrices avec un transfert maximal du couple à l'essieu non moteur) ETC_Mode par la connexion 30, à l'estimation de température de l'actionneur 4x4 piloté ETC_ActTemp par la connexion 31, et à la consigne de couple de transfert à l'axe non moteur ETC_TorqueDemand par la connexion 32.

De plus, il émet deux demandes de désactivation externe du module de limitation de couple moteur 2, l'une étant progressive ETL_ExtSlowDeactivation avec une variation du couple moteur limitée dans le temps et l'autre immédiate ETL_ExtFastDeactivation respectivement par les connexions 33 et 34.

Le premier module 20 émet également à destination du moyen de limitation de couple moteur 2 des valeurs logiques de validité des signaux relatifs à la vitesse des quatre roues S_WheelSpeedRR, S_WheelSpeedFR, S_WheelSpeedRL, S_WheelSpeedFL, au régime moteur S_EngineSpeed, au mode du système S_ETC_Mode, à la température de l'actionneur S_ETC_ActTemp, à la consigne de couple de transfert à l'axe non moteur S_ETC_TorqueDemand, au couple moteur demandé par le conducteur S_DriverEngineTorqueReq respectivement par les connexions 35 à 43. Si le signal provenant du bus de données prend la valeur logique « faux » ou si la valeur du signal provenant du bus de données est en dehors d'une certaine plage permise, la valeur logique de validité correspondant est tout de suite fixé à 1 et en cas contraire il reste à 0. Ce procédé est appliqué à tous les signaux en provenance du bus de données. De plus des contrôles de plausibilité peuvent être effectués.

Le deuxième module 21 d'activation/désactivation du module de limitation de couple moteur 2 est relié en sortie au premier module 20 par les connexions 33 à 43 et reçoit les valeurs logiques de validité des signaux relatifs à la vitesse des quatre roues S_WheelSpeedRR, S_WheelSpeedFR, S_WheelSpeedRL, S_WheelSpeedFL, au régime moteur S_EngineSpeed, au mode du système S_ETC_Mode, à la température de l'actionneur S_ETC_ActTemp, à la consigne de couple de transfert à l'axe non moteur S_ETC_TorqueDemand, au couple moteur demandé par le conducteur S_DriverEngineTorqueReq respectivement par les connexions 35 à 43 et les signaux de désactivation externe ETL_ExtSlowDeactivation et ETL_ExtFastDeactivation respectivement par les connexions 33 et 34. Il émet en sortie un signal de désactivation immédiate ETL_SevereDeactivation booléen et un signal de désactivation progressive ETL_LightDeactivation à destination du quatrième module 23 de détermination de la consigne du couple moteur respectivement par les connexions 44 et 45. Un exemple de réalisation sera décrit dans une figure ultérieure.

Le troisième module 22 est relié en sortie au premier module 20 par les connexions 24 à 29 et reçoit en entrée les signaux relatifs aux vitesses des quatre roues WheelSpeed_FR, WheelSpeed_RR, WheelSpeed_RL, WheelSpeed_FL, au régime moteur EngineSpeed et le couple moteur demandé par le conducteur DriverEngineTorqueReq respectivement par les connexions 24 à 29. Il réalise le filtrage de certains de ces signaux d'entrée à l'aide de filtres passe bas du premier ordre. Il estime notamment le rapport de boîte engagé GearBoxRation et la vitesse du véhicule VehicleSpeed. Il émet les signaux filtrés FltVehiculeSpeed, FltDriverEngineTorqueReq, FltEngineSpeed, FltFrRrWheelSlip, et le rapport de boîte engagé GearBoxRation à destination du quatrième module 23 de détermination de la consigne du couple moteur respectivement par les connexions 46 à 50. Un exemple de réalisation du troisième module 22 sera décrit dans une figure ultérieure.

Le quatrième module 23 est relié en sortie aux premier, deuxième et troisième modules 20, 21 et 22 et reçoit en entrée les signaux relatifs à la désactivation en provenance du deuxième module 21 par les connexions 44 et 45, les signaux filtrés et le rapport de boîte engagé en provenance du troisième module 22 par les connexions 46 à 50 et les signaux d'entrées relatifs à l'estimation de la température de l'actionneur 4x4 piloté ETC_ActTemp par la connexion 30, au mode du système ETC_Mode par la connexion 31 et à la consigne de couple de transfert à l'axe non moteur ETC_TorqueDemand par la connexion 32 en provenance du premier module 20. Il élabore en fonction de ces entrées deux signaux de sortie à destination du moyen de commande du moteur 5, un premier signal de sortie relatif à la consigne de couple moteur ETL_EngTorqueReq et une valeur logique de demande de limitation de couple moteur ETL_TorqueReductionReq respectivement par les connexions 14 et 15.

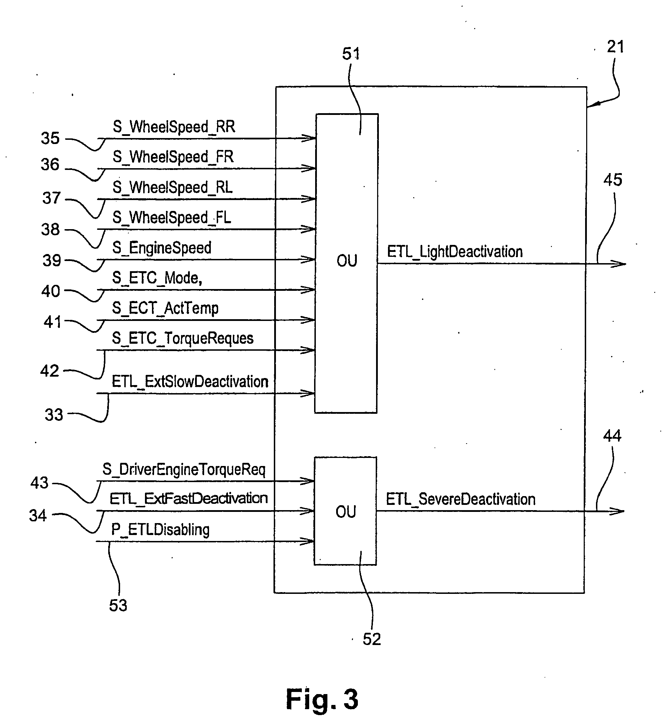

La figure 3 illustre un exemple de réalisation du deuxième module 21. Il comprend un premier module logique « OU » 51 relié en sortie au premier module 20 par les connexions 33 et 35 à 42 et recevant en entrée les valeurs logiques de validité relatives aux vitesses des roues, S_WheelSpeedRR, S_WheelSpeedFR, S_WheelSpeedRL et S_WheelSpeedFL, au régime moteur S_EngineSpeed, au mode du système S_ETC_Mode, à l'estimation de température de l'actionne 4x4 piloté S_ETC_ActTemp, à la consigne de couple de transfert à l'axe non moteur S_ETC_TorqueRequest respectivement par les connexions 35 à 42 et le signal relatif à la demande de désactivation externe du module de limitation de couple moteur 2 ETL_ExtSlowDeactivation par la connexion 33. Le premier module logique « OU » 51 élabore en sortie un signal relatif à une désactivation progressive ETL_LightDeactivation à destination du quatrième module 23 par la connexion 45.

Le deuxième module 21 comprend également un deuxième module logique « OU » 52 recevant en entrée la valeur logique de validité relative au couple moteur demandé par le conducteur S_DriverEngineTorqueReq par la connexion 43, le signal relatif à la demande externe de désactivation immédiate du couple moteur ETL_ExtFastDeactivation par la connexion 34 et le signal relatif à une désactivation effectuée par des outils de calibration P_ETLDisabling par la connexion 53. Il élabore en sortie un signal booléen relatif à une désactivation immédiate ETL_SevereDeactivation à destination du quatrième module 23 par la connexion 44.

Le premier module logique « OU » 51 effectue une opération logique de type « OU » entre les différents signaux booléens reçus en entrée du module. Lorsque la valeur logique relative au mode du système S_ETCMode est non nul, c'est-à-dire que l'on n'est pas sûr du mode du système, ou lorsqu'au moins une valeur logique relative à la vitesse d'une roue S_WheelSpeedRR par exemple est non nul, c'est-à-dire qu'au moins une information sur la vitesse des roues est considéré comme erronée, ou lorsque le signal booléen relatif à une désactivation extérieure progressive ETL_ExtSlowDeactivation est non nul, c'est-à-dire qu'une panne mineure a été décelée par le moyen de commande de l'actionneur 3, comme par exemple un échec du protocole de communication entre le moyen de commande de l'actionneur et le tableau de bord, le signal booléen, en sortie du premier module logique « OU » 51, relatif à une désactivation progressive ETL_LightDeactivation sera un signal booléen non nul indiquant que le module de limitation de couple moteur doit être arrêté et peut être désactivé de façon progressive.

Le deuxième module logique « OU » 52 effectue une opération logique de type « OU » entre les trois signaux booléens reçus en entrée du module. Lorsque la valeur logique du signal relatif au couple moteur demandé par le conducteur S_DriverEngineTorqueReq est non nul, ou lorsque le signal booléen relatif aux outils de calibration est non nul ou lorsque le signal booléen relatif à une désactivation extérieure immédiate ETL_ExtFastDeactivation est non nul, c'est-à-dire qu'une panne grave a été décelée comme par exemple un échec du protocole de communication entre le moyen de commande de l'actionneur 3 et le moyen de commande de l'actionneur 5, le signal booléen, en sortie du deuxième module logique 52 relatif à une désactivation immédiate ETL_SevereDeactivation sera un signal booléen non nul indiquant que le module de limitation de couple moteur doit impérativement être arrêté de façon immédiate. Ainsi la limitation du couple moteur est sécurisée car elle peut être désactivée immédiatement ou de façon progressive en fonction de la panne et/ou de la situation de conduite.

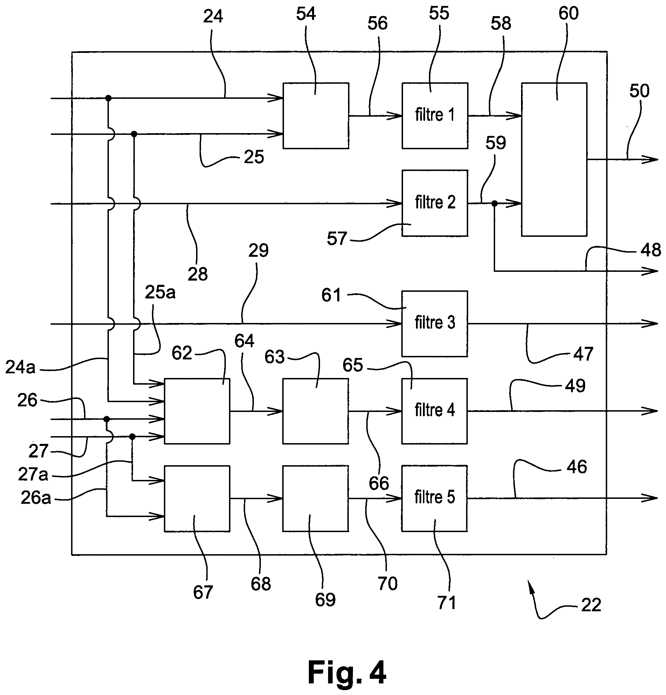

Sur la figure 4, on a représenté un exemple de réalisation du troisième module 22. Un premier module 54 de calcul de moyenne reçoit en entrée les vitesses des roues avant WheelSpeed_FR et WheelSpeed_FL par les connexions 24 et 25 et émet en sortie la moyenne de ces vitesses à destination d'un premier filtre passe-bas 55 du premier ordre par la connexion 56. Le premier filtre 55 génère la vitesse filtrée du train avant du véhicule FltFrontAxleSpeed, afin d'éliminer tout bruit à haute fréquence. Un deuxième filtre 57 passe-bas du premier ordre filtre la vitesse de rotation du moteur EngineSpeed reçu par la connexion 28 et émet un signal filtré relatif au régime moteur FltEngineSpeed à destination du quatrième module 23 par la connexion 48.

Les résultats en sortie des premier et deuxième filtres 55 et 57 constituent les signaux d'entrée respectivement par les connexions 58 et 59 d'un module de détermination du rapport de boîte 60 dont un exemple de réalisation sera détaillé dans une figure ultérieure. Le module de détermination du rapport de boîte détermine le rapport de boîte engagé GearBoxRatio et le transmet au quatrième module 23 par la connexion 50.

Un troisième filtre passe bas 61 du premier ordre filtre le signal relatif au couple moteur demandé par le conducteur DriverEngineTorqueReq reçu par la connexion 29 pour éliminer tout bruit à haute fréquence et émet en sortie le signal filtré FltDriverEngineTorqueReq à destination du quatrième module 23 par la connexion 47. Un deuxième module 62 de calcul reçoit en entrée les quatre vitesses des roues WheelSpeed_FR, WheelSpeed_FL, WheelSpeed_RR, WheelSpeed_RL par les connexions 24a, 25a, 26 et 27 et effectue la moyenne de la différence de la vitesse du train avant et du train arrière du véhicule. La moyenne de la différence de la vitesse du train avant et du train arrière est transmise à un filtre passe bande 63 par la connexion 64 de manière à éliminer le phénomène d'instabilité mécanique. Le filtrage de l'écart de la vitesse avant par rapport au train arrière par un filtre passe bas et un filtre coupe bande est utilisé pour augmenter les prestations de franchissement et de motricité.

Le signal émis par le filtre passe bande est ensuite transmis à un quatrième filtre 65 passe bas de premier ordre par la connexion 66 permettant de filtrer la moyenne de la différence de la vitesse du train avant et du train arrière éliminant tout bruit à haute fréquence. Le quatrième filtre passe bas 65 émet un signal filtré FltFrRrwheelSlip à destination du quatrième module 23 par la connexion 49. Un troisième module 67 de calcul de moyenne reçoit en entrée les vitesses des deux roues arrière WheelSpeed_RR et WheelSpeed_RL par les connexions 26a et 27a et effectue la moyenne de ces vitesses. Le signal émis par le troisième module 67 de calcul de moyenne est multiplié par le rayon des roues en passant par le biais de la connexion 68 dans un multiplicateur 69. Ce dernier émet un signal par la connexion 70 à destination d'un cinquième filtre 71 passe bas de premier ordre permettant d'éliminer tout bruit à haute fréquence. En sortie du cinquième filtre 71, la vitesse filtrée du véhicule FltVehicleSpeed est émise à destination du quatrième module 23 par la connexion 46.

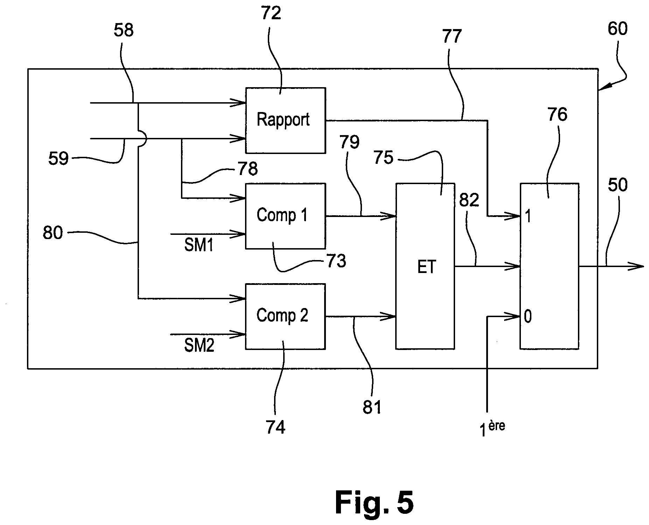

On a représenté sur la figure 5, un exemple de détermination du rapport de boîte GearBoxRatio par un module de détermination du rapport de boîte 60. Le module de détermination 60 comprend un diviseur 72, un premier comparateur 73, un deuxième comparateur 74, un module logique « ET » 75 et un commutateur 76. Le diviseur 72 reçoit par les connexions 58 et 59 respectivement les signaux filtrés relatifs à la vitesse du train avant FltFrontAxleSpeed et à la vitesse filtrée du moteur FltEngineSpeed. Il effectue le rapport de ces deux signaux et l'émet par la connexion 77 à destination du commutateur 76. La vitesse filtrée du train avant FltFrontAxleSpeed émise par la connexion 78 à destination du premier comparateur 73 est comparée à un premier seuil minimum SM1 qui émet alors un signal booléen par la connexion 79 à destination du module logique « ET » 75. La vitesse filtrée du moteur FltEngineSpeed émise par la connexion 80 à destination du deuxième comparateur 74 est comparée à un deuxième seuil minimum SM2 qui émet alors un signal booléen par la connexion 81 à destination du module logique « ET » 75. Le module logique « ET » 75 est relié en entrée au commutateur 76 par la connexion 82 et émet un signal booléen. Si le signal booléen en sortie du module logique « ET » 75 prend la valeur logique 1, le rapport de boîte engagé GearBoxRatio transmis par le commutateur 76 au quatrième module 23 par la connexion 50 est égal au rapport calculé par le diviseur 72. Si le signal booléen en sortie du module logique « ET » 75 prend la valeur logique 0, c'est-à-dire à faible régime moteur et/ou à faible vitesse de l'axe avant, le rapport de boîte engagé par défaut est la première.

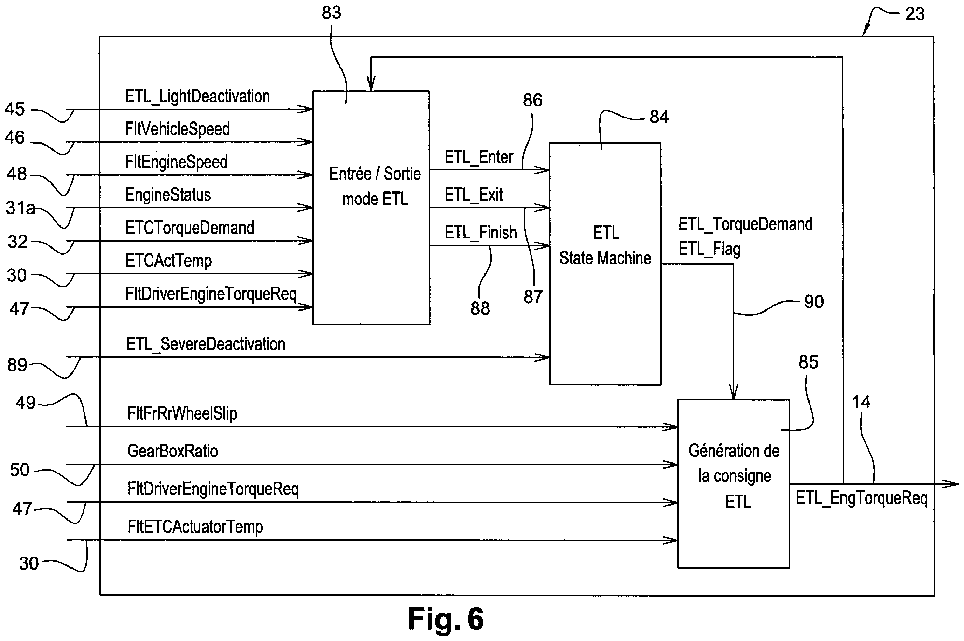

La figure 6 illustre un exemple de réalisation du quatrième module 23 de détermination de la consigne de limitation de couple moteur. Il comprend un module d'élaboration 83 des signaux de commande destinés à un module de détermination 84 de l'état du module de limitation de couple moteur et un module de génération 85 de la consigne de limitation de couple moteur. Ces trois modules 83, 84 et 85 sont en rétroaction : le module de génération de la consigne de limitation de couple moteur 85 est relié en sortie au module d'élaboration des signaux de commande 83.

Le module d'élaboration 83 des signaux de commande reçoit en entrées le signal relatif à une désactivation progressive issu du deuxième module 21 ETL_LightDeactivation par la connexion 45, les signaux filtrés issus du troisième module 22 relatifs à la vitesse du véhicule FltVehicleSpeed, au régime moteur FltEngineSpeed et au couple moteur demandé par le conducteur FltDriverEngineTorqueReq respectivement par les connexions 46 à 48, et les signaux relatifs à l'estimation de la température de l'actionneur 4x4 ETC_ActTemp par la connexion 30, à la consigne de couple de transfert à l'axe non moteur ETC_TorqueDemand par la connexion 32 et au statut du moteur EngineStatus par la connexion 31a issus du premier module 20. Le module d'élaboration des signaux de commande 83 élabore trois signaux booléens de commande d'activation et de désactivation en fonction de certaines conditions vérifiées ou non par les signaux d'entrée : un signal d'inactivité ETL_Exit du module de limitation de couple moteur, un signal d'activité ETL_Enter du module de limitation de couple moteur et le signal de fin ETL_Finish de demande de limitation de couple moteur émis respectivement par les connexions 86 à 88 à destination du module de détermination 84 de l'état.

Le signal d'inactivité ETL_Exit du module de limitation de couple moteur est vrai si toutes les conditions pour être en mode de limitation de couple moteur ne sont pas respectées. Dans notre exemple, ETL_Exit est vrai si le signal relatif à une désactivation immédiate ETL_SevereDeactivation est vrai ou si le signal relatif à une désactivation progressive ETL_LightDeactivation est vrai, ou si la vitesse filtrée du véhicule est supérieure à un certain seuil maximum, ou si le moteur n'est pas en marche, ou si la vitesse filtrée du régime moteur FltEngineSpeed est inférieur à un certain seuil minimum, ou si la consigne de couple de transfert à l'axe non moteur ETC_TorqueDemand est inférieure à un certain seuil minimum ou si la température de l'actionneur 4x4 ETC_ActTemp est inférieur à certain seuil minimum ou si le mode du véhicule ETC_Mode est un « mode 4x2 ». Si au moins une de ces conditions est vérifiée, la limitation du couple moteur est arrêtée. Il est à noter qu'en fonction du type de prestation souhaitée, une ou plusieurs de ces conditions peuvent être changées. Par exemple, si l'on veut que le module de limitation de couple moteur 2 soit toujours disponible quelque soit la vitesse du véhicule, la condition concernant la vitesse peut être supprimée. Cette suppression peut être réalisée simplement par calibration en mettant un seuil de vitesse supérieure à la vitesse maximale du véhicule.

Le signal d'activité ETL_Enter du module de limitation de couple moteur est vrai si le mode limitation de couple moteur est actif. Dans notre exemple, ETL_Enter est vrai lorsque les signaux de désactivation ETL_SevereDeactivation et ETL_LightDeactivation sont faux et si le signal d'inactivité ETL_Exit est faux et si le vitesse filtrée du véhicule est inférieure à un seuil minimal et si le véhicule est en marche et si la vitesse filtrée du régime moteur est supérieure à un seuil maximal et si la consigne de couple de transfert à l'axe non moteur ETC_TorqueDemand est supérieure à un certain seuil maximal et si la température de l'actionneur 4x4 ETC_ActTemp est supérieure à un certain seuil maximal et si le mode du véhicule ETC Mode n'est pas en « mode 4x2 ».

Le signal de fin ETL_Finish de limitation de couple moteur est vrai si la consigne du couple moteur déterminée par le module de génération de la consigne de couple moteur 85 est supérieure ou égale au signal filtré du couple moteur demandé par le conducteur FltDriverEngineTorqueReq ou si l'état du module de limitation de couple moteur est actif pendant plus d'une certaine durée appelée TimeOut.

Le module de détermination de l'état du module 84 est une machine d'état relié en sortie au module d'élaboration 83 des signaux de commande et reçoit les trois signaux précédemment décrits par les connexions 86 à 88 et le signal relatif à une désactivation immédiate du module ETL_SevereDeactivation par la connexion 89. En fonction de ces signaux d'entrée, le module de détermination 84 de l'état du module élabore un premier signal ETL_State donnant l'état du système. Ce signal ETL_State est partagé entre les différents modules du quatrième module 23.

Quatre principaux états peuvent être considérés :
Un état de « non demande de limitation de couple moteur » représenté par une valeur nulle de ETL_State qui est établi lorsque le signal relatif à une désactivation immédiate ETL_SevereDeactivation est vrai.

Un état d' « attente » représenté par ETL_State égal à 1 lorsque le signal relatif à une désactivation immédiate ETL_SevereDeactivation est faux, le signal d'activité ETL_Enter est faux. En effet, on est dans cet état d'attente si toutes les conditions pour effectuer une requête de limitation de couple moteur ne sont pas satisfaites.

Un état de « limitation de couple moteur possible » représenté par une valeur de ETL_State égale à 2 qui est établi lorsque le signal relatif à une désactivation immédiate ETL_SevereDeactivation est faux, le signal d'activité ETL_Enter est vrai et le signal d'inactivité ETL_Exit est faux.

Un état qui favorise la requête du conducteur où « on redonne la main au conducteur » représenté par une valeur de ETL_State égale à 3 est établi lorsque le signal relatif à une désactivation immédiate ETL_SevereDeactivation est faux, le signal d'activité ETL_Enter est faux ou le signal d'inactivité ETL_Exit est vrai et si le signal de fin de limitation ETL_Finish est faux. On est dans cet état lorsque toutes les conditions pour effectuer une requête de limitation de couple moteur ne sont plus satisfaites. On redonne alors de façon progressive la main au conducteur. Le couple cible est alors le couple demandé par le conducteur représenté par le signal FltDriverEngineTorqueDemand.

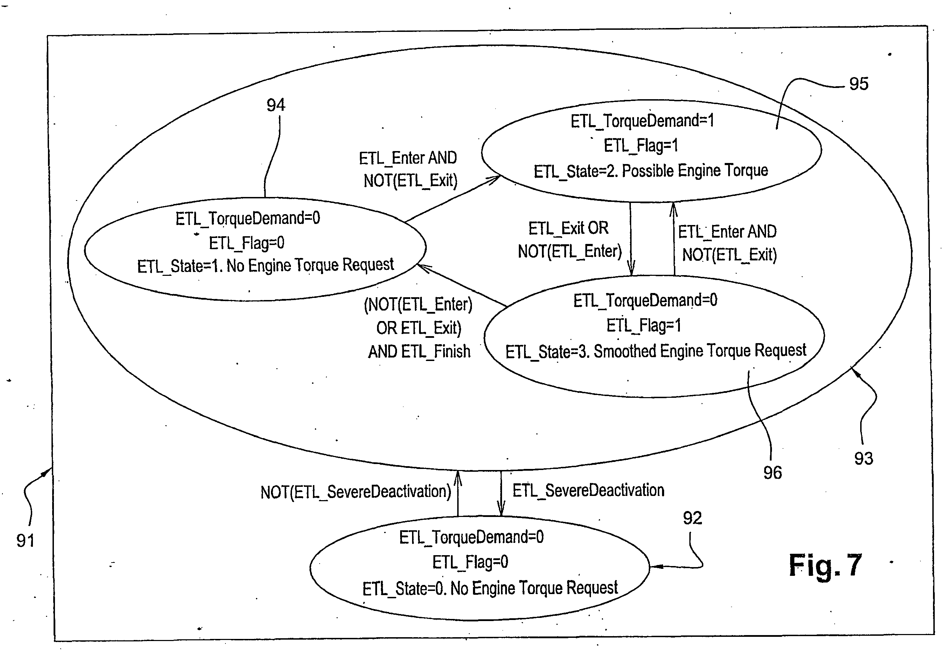

En fonction de l'état du module de limitation de couple moteur représenté par la variable ETL_State, le module de détermination 84 de l'état du module de limitation de couple moteur élabore un premier et un deuxième signal booléen à destination du module de génération de la consigne de limitation de couple moteur par la connexion 90. Le premier signal ETL_TorqueDemand est un signal relatif à une demande réelle de limitation de couple moteur et le deuxième signal ETL_Flag peut être défini comme le signal donnant une information sur l'aptitude du système à répondre à la demande de limitation de couple moteur. Un exemple de procédé de détermination de l'état du système par le module de détermination de l'état du module 84 est décrit dans la figure 7.

Le module de génération de la consigne de limitation de couple moteur 85 est relié en sortie au module de détermination 84 d'état du module de limitation de couple moteur et reçoit en entrée les deux signaux booléens relatifs à l'état du système ETL_TorqueDemand et ETL_Flag par la connexion 90 mais aussi le signal filtré du glissement avant-arrière FltFrRrWheelSlip par la connexion 49, le rapport de boîte engagé GearBoxRatio par la connexion 50, le signal filtré relatif à la demande de couple moteur du conducteur FltDriverEngineTorqueReq par la connexion 47 et l'estimation de la température de l'actionneur piloté 4x4 ETC_ActuatorTemp par la connexion 30. La réalisation de la consigne de limitation du couple moteur ETL_EngTorqueReq en sortie du module de génération de la consigne de limitation de couple moteur 85 est donc fonction de la température de l'actionneur ETC_ActuatorTemp.

Le quatrième module 23 émet donc en sortie une consigne de limitation du couple moteur qui évolue en fonction de l'état du système et donc du temps. La mise en rétroaction des modules du quatrième module 23 permet un contrôle de la consigne de limitation de couple moteur en sortie en fonction des différents paramètres du véhicule.

La figure 7 illustre un exemple de procédé de détermination des deux signaux booléens en sortie du module de détermination 84 de l'état du module de limitation de couple moteur par la connexion 90. Il prend en compte les quatre états précédemment définis représentés par la variable ETL_State. Le procédé 86 comprend une étape d'initialisation 92 et un cycle 93. Lorsqu'une désactivation immédiate est effectuée (ETL_SevereDeactivation est vrai), la valeur nulle de la variable d'état ETL_State correspond à une absence de demande de limitation de couple moteur. Il n'y a pas de demande réelle de limitation de couple moteur, le signal ETL_TorqueDemand prend alors la valeur nulle. De plus le système n'est pas apte à répondre à une demande de limitation de couple moteur, le signal ETL_Flag prend donc une valeur nulle. En effet, dès que le module de limitation de couple moteur est désactivé de façon immédiate, il ne peut y avoir de demande de réduction de couple moteur. Ce cas constitue l'étape d'initialisation 92 du procédé 91.

S'il n'y pas de désactivation immédiate, on effectue le cycle 93. Il comprend une première étape 94 lorsque ETL_State prend la valeur de 1. Lors de cette première étape 94, les conditions pour effectuer une requête n'étant pas satisfaites, comme par exemple une vitesse du véhicule trop importante, ETL_TorqueDemand et ETL_Flag prennent une valeur nulle. Si les conditions pour effectuer une requête sont satisfaisantes, on passe à la deuxième étape 95 : ETL_State prend la valeur 2 et le signal relatif à une demande de limitation de couple moteur ETL_TorqueDemand et le signal de l'aptitude du système à répondre à cette demande ETL_Flag prennent la valeur 1. Si les conditions pour effectuer une requête de limitation de couple moteur ne sont plus satisfaites, on passe à la troisième étape 96 : ETL_State prend la valeur 3, le signal relatif à une demande de limitation de couple moteur est nulle ETL_TorqueDemand. On donne la main au conducteur pour limiter le couple moteur mais une limitation de couple moteur est possible vu l'état du système, le signal ETL_Flag prend la valeur 1. Si lorsqu'on se trouve en troisième étape 96, c'est-à-dire qu'ETL_State est égal à 3, l'état du système ne permet plus d'effectuer une requête (vitesse du véhicule trop importante par exemple), on passe à la première étape 94 : ETL_State passe à la valeur 1 et l'état est un état d' « attente ». Il est aussi possible de passer de la troisième étape 96 à la deuxième étape 95 lorsque le couple demandé par le conducteur est plus grand que la consigne du couple moteur. Ainsi le couple moteur ne peut être limité que lorsque ETL_Flag est égal à 1.

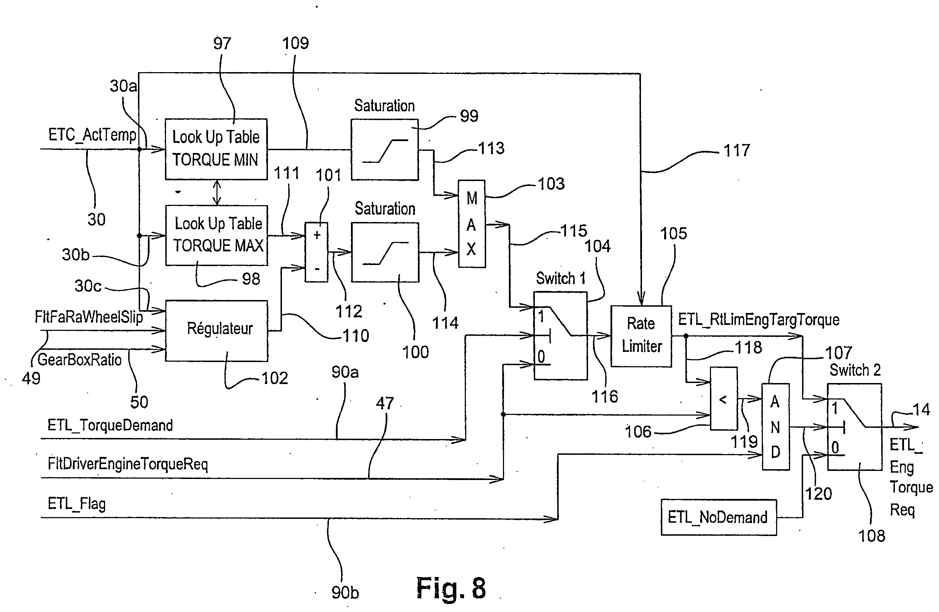

La figure 8 illustre une possible réalisation de la consigne de réduction du couple moteur ETL_EngTorqueReq. Le module de génération 85 de la consigne de limitation du couple moteur comprend une table de seuil minimal de couple 97, une table de seuil maximal de couple 98, un premier bloc de saturation 99, un deuxième bloc de saturation 100, un soustracteur 101, un régulateur 102, un moyen de détermination du maximum de valeurs 103, un premier commutateur 104, un limiteur de seuil 105, un comparateur 106, un module logique « ET » 107 et un deuxième commutateur 108.

La table de seuil minimal de couple 97 et la table de seuil maximal de couple 98 ont pour entrée l'estimation de la température de l'actionneur ETC_ActTemp par la connexion 30a. A tout instant, la consigne de couple moteur est limitée entre deux valeurs TorqueMin et Torquemax qui sont fonction de la température de l'actionneur ETC_ActTemp. Pour cela le seuil inférieur déterminé par la table de seuil minimal de couple 97 constitue un signal d'entrée du premier bloc de saturation 99 par la connexion 109 qui limite la valeur en sortie de la table de seuil minimal TorqueMin à une valeur calibrée P_EngTorqueReqMin. Le régulateur 102 reçoit en entrée l'estimation de la température de l'actionneur ETC_ActTemp par la connexion 30c, le rapport de boîte engagé GearBoxRatio par la connexion 50 et la différence filtrée de vitesse entre l'axe moteur et l'axe non moteur FltFrRrWheelSlip par la connexion 49. Il permet d'avoir un réglage intrusif pour des températures intermédiaires de l'actionneur ou au contraire d'avoir un réglage avec un maximum d'efficacité et perceptible en cas de température critique de l'actionneur.

La dépendance par rapport au rapport de boîte engagé est nécessaire si l'on considère la stabilité du système. Après régulation, le signal de sortie du régulateur 102 est émis à destination du soustracteur 101 par la connexion 110 et est soustrait au maximum de couple moteur TorqueMax par le soustracteur 101.

Le maximum de couple moteur est émis via la connexion 111, par la table de seuil maximal de couple 98, ayant reçu l'estimation de température de l'actionneur ETC_TempAct par la connexion 30b. Le résultat de cette soustraction est en entrée du deuxième bloc de saturation 100, par la connexion 112, qui limite la valeur en sortie du soustracteur 101 à une valeur calibrée P_EngTorqueReqMax. Ces deux paramètres P_EngTorqueReqMax et P_EngTorqueReqMin sont des paramètres de réglage de la fonction de saturation.

Le moyen de détermination du maximum de valeurs 103 reçoit en entrée la valeur maximale régulée et la valeur minimale du couple moteur TorqueMin et TorqueMaxReg respectivement par les moyens de connexion 113 et 114. Il émet en sortie une consigne de couple moteur ETL_EngTargTorque comprise entre les paramètres P_EngTorqueReqMin et P_EngTorqueReqMax à destination du premier commutateur 104 par la connexion 115 qui en fonction de la valeur du signal booléen ETL_TorqueDemand reçu par la connexion 90a émettra cette consigne de couple moteur ou celle demandé par le conducteur FltDriverEngineTorqueDemand. Si ETL_TorqueDemand est égal à 1 alors le couple cible est ETL_EngTargTorque, fonction de la température de l'actionneur ETC_ActTemp, du glissement avant arrière FltFrRrWheelSlip et du rapport engagé GearBoxRatio, sinon le couple cible est le couple demandé par le conducteur.

Le couple moteur ETL_EngTargTorque émis par le moyen de détermination du maximum de valeurs 103 constitue une entrée du limiteur 105 par la connexion 116 qui reçoit également la valeur de la température de l'actionneur ETC_ActTemp par la connexion 117 et qui limite les variations au cours du temps de la consigne de couple moteur ETL_EngTargTorque en fonction de la température de l'actionneur. Par exemple, à haute température, on peut tolérer des variations plus importantes.

Le limiteur 105 émet en sortie une consigne de couple moteur limitée ETL_RtLimEngTargTorque qui, en entrée par la connexion 118 est comparée dans le comparateur 106 à la demande de consigne de couple moteur du conducteur FltDriverEngineTorqueReq.

Le comparateur 106 émet un signal booléen. Ce signal booléen est en entrée du module logique « ET » 107 par la connexion 119. Le signal booléen ETL_flag est en entrée par la connexion 90b du module logique « ET » 107.

Le module logique « ET » 107 émet un signal booléen à destination du deuxième commutateur 108 par la connexion 120. Le deuxième commutateur 108 émet en fonction du couple demandé par le conducteur et l'état du système une consigne de couple moteur par la connexion 14.

Si la sortie du module logique « ET » 107 est égale à 1, c'est-à-dire si le couple demandé par le conducteur est plus grand que le couple calculé par le régulateur et que ETL_flag est égal à 1, alors le couple moteur est limité et la consigne de couple moteur est égale à ETL_RtLimEntTargTorque et sinon aucune requête de couple moteur n'est effectuée.

Ainsi, la limitation de couple moteur, permettant de maximiser les capacités de franchissement et de motricité d'un véhicule doté d'un système 4x4 piloté, dépend de la situation de conduite et de l'état du système 4x4.

De plus, elle est sécurisée grâce à un échange d'information robuste entre le moyen de commande du moteur et le moyen de commande de l'actionneur, à une désactivation dépendante de la gravité d'une panne, et à une limitation de couple moteur toujours inférieure ou égale au couple demandé par le conducteur. En outre, cette limitation de couple moteur est fonction de la température estimée ou mesurée de l'actionneur.

En effet, une consigne de couple moteur maximale permettant une action préventive et une consigne de couple moteur minimale permettant une action curative sont fonction de la température de l'actionneur.

De même, cette limitation de couple moteur est fonction du rapport engagé avec une consigne de couple moteur maximale et une consigne de couple moteur minimale dépendantes du rapport engagé.

Enfin, la limitation de couple moteur ainsi déterminée permet de redonner la main au conducteur de façon progressive grâce à un mécanisme limitant les variations du couple au cours du temps.

Ce mécanisme de limitation des variations de couple est fonction de la température de l'actionneur comme représenté figure 8. A faible température, le confort et la prestation de franchissement sont privilégiés, à haute température, la tenue et la disponibilité de l'actionneur sont privilégiées.

Selon l'exemple proposé, l'actionneur est un embrayage multi-disques qui transmet le couple par friction, cet embrayage étant piloté électriquement à l'aide d'un électro-aimant.

L'invention peut toutefois s'appliquer à d'autres types d'actionneur, la présente invention visant principalement la gestion du couple d'entrée issu du moteur pour le répartir au mieux sur les quatre roues du véhicule.

## Revendications

1. Système de limitation de couple moteur d'un véhicule automobile à système de traction à quatre roues motrices, comprenant un actionneur piloté de transfert de couple, et configuré pour distribuer le couple moteur aux roues motrices, des moyens de calcul (1) pour calculer au moins une variable caractéristique du fonctionnement du véhicule, et un module de limitation du couple moteur (2) en fonction desdites variables, le module de limitation du couple moteur (2) comprenant des moyens (23) pour élaborer une consigne de limitation du couple moteur destinée à l'actionneur, et des moyens (21) de désactivation du module de limitation du couple moteur en fonction des variables caractéristiques du fonctionnement du moteur, **caractérisé en ce que** les moyens de désactivation (21) sont aptes à élaborer un premier signal de désactivation pour une désactivation immédiate du module de limitation de couple moteur et un deuxième signal de désactivation pour une désactivation progressive du module de limitation du couple moteur..

2. Système selon la revendication 1, dans lequel les signaux d'entrée du module de limitation du couple moteur sont caractéristiques de la situation de conduite d'une part et de l'état de fonctionnement du système de traction à quatre roues motrices du véhicule.

3. Système selon l'une quelconque des revendications 1 et 2, comprenant un moyen pour limiter progressivement les variations du couple moteur au cours du temps en fonction de la température de l'actionneur.

4. Système selon l'une quelconque des revendications 1 à 3, comprenant des moyens de traitement (22) configurés pour filtrer les signaux d'entrée et déterminer le rapport de transmission de la boîte engagé destiné au moyen d'élaboration de la consigne (23).

5. Système selon l'une quelconque des revendications 1 à 4, dans lequel le moyen (23) d'élaboration de la consigne comprend un module de détection des conditions de limitation (83) apte à délivrer des signaux de contrôle d'activation et de désactivation du module de limitation et un module de génération de consigne (85) apte à élaborer un signal de consigne de couple moteur.

6. Système selon la revendication 5, dans lequel le module de détection des conditions de limitation (81) est apte à délivrer des signaux de contrôle en fonction de la valeur des variables caractéristiques du fonctionnement du véhicule et des signaux d'activation et de désactivation.

7. Procédé de limitation du couple moteur d'un véhicule automobile à système de traction à quatre roues motrices et comprenant un actionneur piloté et configuré pour distribuer le couple moteur aux roues motrices, dans lequel on calcule au moins une variable caractéristique du fonctionnement du véhicule, on limite le couple moteur en fonction desdites variables, on commande le couple moteur autour d'une consigne de limitation de couple moteur, on désactive la limitation du couple moteur en fonction des variables caractéristiques du fonctionnement du moteur, **caractérisé en ce qu'**on procède à une désactivation immédiate ou progressive de la limitation de couple moteur.

8. Procédé selon la revendication 7, dans lequel on limite progressivement les variations du couple moteur au cours du temps en fonction de la température de l'actionneur.

9. Procédé selon l'une quelconque des revendications 7 à 8, dans lequel on détecte des conditions de limitation et l'on délivre des signaux de contrôle d'activation et de désactivation de la limitation de couple et l'on élabore un signal de consigne de couple moteur.

10. Procédé selon l'une quelconque des revendications 7 à 9, dans lequel les signaux de contrôle sont délivrés en fonction de la valeur de variables caractéristiques du fonctionnement du véhicule et des signaux d'activation et de désactivation.

## Patentansprüche

1. System zur Begrenzung des Motordrehmoments eines Fahrzeugs mit Allradantriebssystem, umfassend ein gesteuertes Stellglied zur Drehmomentübertragung, und das konfiguriert ist, um das Motordrehmoment auf die Antriebsräder zu verteilen, Berechnungsmittel (1) zum Berechnen mindestens einer charakteristischen Variablen des Fahrzeugbetriebs und ein Modul zur Begrenzung des Motordrehmoments (2) in Abhängigkeit von den Variablen, wobei das Modul zur Begrenzung des Motordrehmoments (2) Mittel (23) zum Erzeugen eines Sollwerts zur Begrenzung des Motordrehmoments für das Stellglied sowie Mittel (21) zur Deaktivierung des Moduls zur Begrenzung des Motordrehmoments in Abhängigkeit von den für den Motorbetrieb charakteristischen Variablen umfasst, **dadurch gekennzeichnet, dass** die Deaktivierungsmittel (21) in der Lage sind, ein erstes Deaktivierungssignal zur sofortigen Deaktivierung des Moduls zur Begrenzung des Motordrehmoments und ein zweites Deaktivierungssignal zur schrittweisen Deaktivierung des Moduls zur Begrenzung des Motordrehmoments zu erzeugen.

2. System nach Anspruch 1, bei dem die Eingangssignale des Moduls zur Begrenzung des Motordrehmoments einerseits für die Fahrsituation und andererseits für den Betriebszustand des Allradantriebssystems des Fahrzeugs charakteristisch sind.

3. System nach einem der Ansprüche 1 und 2, umfassend ein Mittel zum schrittweisen Begrenzen der Schwankungen des Motordrehmoments über die Zeit in Abhängigkeit von der Temperatur des Stellglieds.

4. System nach einem der Ansprüche 1 bis 3, umfassend Verarbeitungsmittel (22), die konfiguriert sind, um die Eingangssignale zu filtern und das Übersetzungsverhältnis des eingerückten Getriebes für das Mittel zur Erzeugung des Sollwerts (23) zu bestimmen.

5. System nach einem der Ansprüche 1 bis 4, wobei das Mittel (23) zur Erzeugung des Sollwerts ein Modul zur Erfassung der Begrenzungsbedingungen (83), das in der Lage ist, Steuersignale zur Aktivierung und Deaktivierung des Begrenzungsmoduls bereitzustellen, und ein Modul zur Erzeugung eines Sollwerts (85) umfasst, das in der Lage ist, ein Sollwertsignal für das Motordrehmoment zu erzeugen.

6. System nach Anspruch 5, wobei das Modul zur Erfassung der Begrenzungsbedingungen (81) in der Lage ist, Steuersignale in Abhängigkeit von dem Wert der für den Fahrzeugbetrieb charakteristischen Variablen und den Aktivierungs- und Deaktivierungssignalen bereitzustellen.

7. Verfahren zur Begrenzung des Motordrehmoments eines Fahrzeugs mit Allradantriebssystem und umfassend ein Stellglied, das gesteuert und konfiguriert ist, um das Motordrehmoment auf die Antriebsräder zu verteilen, wobei mindestens eine charakteristische Variable des Fahrzeugbetriebs berechnet wird, das Motordrehmoment in Abhängigkeit von den Variablen begrenzt wird, das Motordrehmoment um einen Sollwert zur Motordrehmomentbegrenzung herum vorgegeben wird, die Motordrehmomentbegrenzung in Abhängigkeit von den für den Betrieb des Motors charakteristischen Variablen deaktiviert wird, **dadurch gekennzeichnet, dass** die Motordrehmomentbegrenzung sofort oder schrittweise deaktiviert wird.

8. Verfahren nach Anspruch 7, bei dem die Schwankungen des Motordrehmoments schrittweise über die Zeit in Abhängigkeit von der Temperatur des Stellglieds begrenzt werden.

9. Verfahren nach einem der Ansprüche 7 bis 8, bei dem Begrenzungsbedingungen erfasst und Steuersignale zur Aktivierung und Deaktivierung der Drehmomentbegrenzung bereitgestellt werden und ein Sollwertsignal für das Motordrehmoment erzeugt wird.

10. Verfahren nach einem der Ansprüche 7 bis 9, bei dem die Steuersignale in Abhängigkeit von dem Wert der für den Fahrzeugbetrieb charakteristischen Variablen und den Aktivierungs- und Deaktivierungssignalen bereitgestellt werden.

## Claims

1. System for limiting the engine torque of a motor vehicle with a four-wheel-drive traction system, comprising a torque-transfer actuator controlled and configured to distribute the engine torque to the drive wheels, computing means (1) for computing at least one variable characteristic of the operation of the vehicle, and a module (2) for limiting the engine torque as a function of said variables, the engine torque limitation module (2) comprising means (23) for generating an engine torque limitation setpoint intended for the actuator, and means (21) for deactivating the engine torque limitation module as a function of the variables characteristic of the operation of the engine, **characterized in that** the deactivation means (21) are capable of generating a first deactivation signal for an immediate deactivation of the engine torque limitation module and a second deactivation signal for a progressive deactivation of the engine torque limitation module.

2. System according to Claim 1, wherein the input signals of the engine torque limitation module are characteristic of the driving situation on the one hand and of the operating state of the four-wheel-drive traction system of the vehicle.

3. System according to either one of Claims 1 and 2, comprising a means for progressively limiting the variations of the engine torque over time as a function of the temperature of the actuator.

4. System according to any one of Claims 1 to 3, comprising processing means (22) configured to filter the input signals and to determine the engaged gearbox transmission ratio intended for the setpoint-generation means (23).

5. System according to any one of Claims 1 to 4, wherein the setpoint-generation means (23) comprises a module (83) for detecting the limitation conditions which is capable of delivering control signals for activation and deactivation of the limitation module and a setpoint-generation module (85) capable of generating an engine torque setpoint signal.

6. System according to Claim 5, wherein the module (81) for detecting the limitation conditions is capable of delivering control signals as a function of the value of the variables characteristic of the operation of the vehicle and activation and deactivation signals.

7. Method for limiting the engine torque of a motor vehicle with a four-wheel-drive traction system and comprising an actuator controlled and configured to distribute the engine torque to the drive wheels, wherein at least one variable characteristic of the operation of the vehicle is computed and the engine torque is limited as a function of said variables, the engine torque is controlled around an engine torque limitation setpoint, the engine torque limitation is deactivated as a function of the variables characteristic of the operation of the engine, **characterized in that** an immediate or progressive deactivation of the engine torque limitation is carried out.

8. Method according to Claim 7, wherein the variations in the engine torque are limited progressively over time as a function of the temperature of the actuator.

9. Method according to either one of Claims 7 and 8, wherein limitation conditions are detected and control signals are delivered for the activation and deactivation of the torque limitation and an engine torque setpoint signal is generated.

10. Method according to any one of Claims 7 to 9, wherein the control signals are delivered as a function of the value of variables characteristic of the operation of the vehicle and of the activation and deactivation signals.
